# EUROPÄISCHE PATENTANMELDUNG

(11) **EP 1 764 144 A1**
(43) Veröffentlichungstag der Anmeldung: **21.03.2007**
(21) Anmeldenummer: 06119600.2
(22) Anmeldetag: 28.08.2006
(51) Int. Cl.: B01D 39/16, B01D 29/21, B01D 29/23

(54) **Filterelement für Flüssigkeiten**

(30) Priorität: 16.09.2005 DE 202005014687 U
(71) Anmelder: MANN+HUMMEL GmbH, 71638 Ludwigsburg (DE)
(72) Erfinder: Stinzendörfer, Joachim, 67346, Speyer (DE)

(57) **Zusammenfassung**

Die Erfindung betrifft ein Filterelement (10) zur Reinigung von Flüssigkeiten, insbesondere für Kühl-, Schmier- oder Bearbeitungsflüssigkeiten bei Werkzeugmaschinen. Das Filterelement (10) verfügt über ein Filtermedium (11) und Endscheiben (13), wobei das Filtermedium (11) insbesondere zylindrisch ausgebildet ist. Die Endscheiben (13) sind an Stirnseiten (12) des Filtermediums (11) dichtend angeordnet. Das Filtermedium (11) verfügt über mindestens zwei unterschiedliche Filterlagen (17), wobei eine dieser Filterlagen (17) durch Nanofasern (18) gebildet ist. Durch die Anordnung einer Filterlage (17) aus Nanofasern (18) wird der Anfangsabscheidegrad des Filterelementes (10) erhöht, wobei die Schmutzspeicherkapazität nicht negativ beeinflusst wird.

## Beschreibung

### Technisches Gebiet

Die Erfindung betrifft ein Filterelement für Flüssigkeiten nach dem Oberbegriff des Anspruches 1

### Stand der Technik

Das Dokument DE 196 08 589 offenbart ein Filterelement für gasförmige oder flüssige Medien, welches in ein Filtergehäuse einsetzbar ist. Das Filterelement verfügt über ein zick-zack-förmig gefaltetes, ringförmig geschlossenes Filtermedium. An seinen Stirnseiten verfügt das Filtermedium über Endscheiben. Zur Erhöhung der Filterstandzeit ist auf der Anströmseite des Filterelementes ein Vorfilter angeordnet, welcher gröbere Verunreinigungen zurückhält. Der Vorfilter ist als gesondertes Bauteil ausgeführt, welches in das Filterelement eingesetzt wird. Durch die Verwendung des Vorfilters kommt das Filterelement erst mit einem vorgereinigten Medium in Kontakt. Der Vorfilter ist abreinigbar, wodurch die Filterstandzeit des Filterelementes erhöht wird. Die übrigen, auf das Filterelement auftreffenden Schmutzpartikel bilden einen Filterkuchen auf der Oberfläche des Filterelementes, wodurch die Filterfeinheit des Filtermediums verbessert wird. Die Anfangsfilterfeinheit des Filterelementes ist gröber, da sich die verbesserte Filterfeinheit erst über den Aufbau des Filterkuchens ergibt. Weiterhin kann das Einsetzen des Vorfilters fehlerhaft erfolgen oder ganz vergessen werden, wodurch die Standzeit des Filterelementes reduziert wird.

Aufgabe der Erfindung ist es ein Filterelement zu schaffen, welches von Anfang an über eine gute Filterfeinheit verfügt, wobei die Schmutzaufnahmekapazität des Filterelementes nicht verschlechtert wird. Außerdem soll das Filterelement einfach in der Handhabung und auch in beengte Bauräume integrierbar sein. Weiterhin soll das Filterelement kostengünstig herstellbar sein. Diese Aufgabe wird durch die Merkmale des Anspruches 1 gelöst.

### Offenbarung der Erfindung

Das erfindungsgemäße Filterelement ist zur Reinigung von Flüssigkeiten, insbesondere für Kühl-, Schmier- oder Bearbeitungsflüssigkeiten bei Werkzeugmaschinen vorgesehen. Derartige Werkzeugmaschinen können z.B. Hochgeschwindigkeitsfräßmaschinen sein. Das Filterelement verfügt über ein Filtermedium und Endscheiben, wobei das Filtermedium beliebig , insbesondere zylindrisch oder konisch ausgebildet sein kann. Hierbei kann das Filtermedium z.B. kreisringförmig oder oval geschlossen ausgeführt sein. Die Endscheiben sind dichtend mit den Stirnseiten des Filtermediums verbunden, wobei die Endscheiben mit dem Filtermedium z.B. verklebt oder verschweißt sein können. Mindestens eine der Endscheiben verfügt über eine Öffnung, durch welche die Flüssigkeit in den Innenbereich einströmen bzw. aus dem Innenbereich herausströmen kann. Die andere Endscheibe kann als geschlossene Scheibe ausgeführt sein. Die Endscheiben können aus Kunststoff oder Metall bestehen, wobei ein Filterelement mit Kunststoffendscheiben, in einer Sondermüllverbrennungsanlage vollständig entsorgt werden kann. Weiterhin korrodieren Endscheiben aus Kunststoff nicht, wodurch das Filterelement auch bei problematischen Flüssigkeiten eingesetzt werden kann. Das Filterelement kann zusätzlich zu den Endscheiben und dem Filtermedium noch über Stützkörper verfügen, welche innerhalb des geschossenen Filtermediums oder außerhalb des Filtermediums angeordnet sein können. Entsprechend der Durchströmungsrichtung kann somit das Filtermedium auf der Abströmseite abgestützt werden, wodurch eine Beschädigung des Filtermediums verhindert wird. Der Stützkörper kann als perforiertes Rohr ausgeführt sein, welches mit den Endscheiben verbunden ist.

Das Filtermedium verfügt über mindestens zwei unterschiedliche Filterlagen, wobei eine dieser Filterlagen durch Nanofasern gebildet ist. Die andere Filterlage, welche als Trägermaterial für die Filterlage aus Nanofasern dient, kann z.B. aus einem Zellulosepapier oder einem herkömmlichen Faservlies gebildet werden, welches über eine Filterfeinheit von z.B. 3 bis 25µm verfügt.

Nanofasern im Sinne dieser Anmeldung sind Fasern, welche im elektrischen Feld hergestellt sind. Hierbei liegt ein Polymer in flüssiger Form, insbesondere als Lösung, Suspension oder Schmelze, vor. Dieses flüssige Polymer bildet einen elektrischen Pol. Der andere elektrische Pol wird durch ein Ablagesystem gebildet. Wird ein entsprechendes Potential zwischen den beiden Polen angelegt und der Transport des Polymers ermöglicht, so entstehen in diesem elektrischen Feld Fasern, die auf einem Träger abgelegt und abtransportiert werden können. Die Masse der Nanofasern ist sehr gering und kann von durch Wägung nicht messbaren, bis zu mehreren Gramm pro m² variieren. Die Filterlage aus Nanofasern ist derart gestaltet, dass sie den Anfangsabscheidegrad des Filtermediums erhöht, ohne die Schmutzaufnahmekapazität negativ zu beeinflussen. Im Allgemeinen wirkt sich ein hoher Anfangsabscheidegrad, welcher der Abscheidegrad eines neu inbetriebgenommenen Filterelement ist, negativ auf die Schmutzspeicherkapazität des Filterelementes aus. Daher ist es überraschend, dass die Verwendung einer Filterlage aus Nanofasern mit einem hohen Anfangsabscheidegrad die Speicherkapazität nicht negativ beeinflusst. Somit verfügt das Filterelement über einen hohen Anfangsabscheidegrad und eine ausreichende Schmutzaufnahmekapazität. Weiterhin sind Handhabungsfehler beim Einbau ausgeschlossen, da die mindestens zwei Filterlagen in das Filterelement integriert sind und gemeinsam ausgetauscht werden. Außerdem kann das erfindungsgemäße Filterelement auch in beengte Bauräume integriert werden, da die Filterlage aus Nanofasern keinen gesonderten Bauraum benötigt. Die Herstellung des Filterelementes ist kostengünstig, da die Filterlagen gemeinsam mit den Endscheiben verbunden werden und hierzu keine gesonderten Arbeitsgänge , bzw. Bauteile erforderlich sind.

Gemäß einer besonderen Ausgestaltung der Erfindung verfügen die Nanofasern über einen Faserdurchmesser von 0,15µm bis 1,0µm. Somit können extrem dünne Filterlagen mit einem hohen Abscheidegrad hergestellt werden, welche nahezu masselos sind und weder Bauraum beanspruchen noch das Bauteilgewicht erhöhen.

Es ist vorteilhaft, dass die aus Nanofasern gebildete Filterlage auf der Anströmseite des Filtermediums angeordnet ist. Hierbei werden die Schmutzpartikel von dem Auftreffen auf die nachfolgende Filterlage abgehalten, wodurch sich der, durch die Schmutzpartikel gebildete, Filterkuchen auf der, durch die Nanofasern gebildete Filterlage aufbaut.

Bei einer alternativen Ausgestaltung, ist die aus Nanofasern gebildete Filterlage auf der Abströmseite des Filtermediums angeordnet. Die gröbere Filterlage aus dem Trägermaterial wirkt als Vorfilter, da die zu reinigende Flüssigkeit zuerst diese Filterlage durchströmen muss, bevor sie auf die Filterlage aus Nanofasern auftrifft. Somit scheiden sich gröbere Verunreinigungen bereits auf der gröberen Filterlage ab und verstopfen die Schicht aus Nanofasern nicht. Die Nanofasern bilden einen Endabscheider, welcher von Beginn an eine sehr hohe Reinheit der gereinigten Flüssigkeit gewährleistet. Durch diesen Aufbau des Filtermediums wird eine echte Tiefenfiltration erzeugt.

Bei einer vorteilhaften Ausgestaltung der Erfindung ist das Filtermedium zick-zack-förmig gefaltet und ringförmig geschlossen. Durch die zick-zack-Faltung des Filtermediums verfügt das Filterelement über eine größtmögliche Oberfläche, welche zur Filtration zur Verfügung steht. Die aus Nanofasern gebildete Filterlage ist gemeinsam mit der zweiten, insbesondere aus Zellulosepapier oder Vlies gebildeten Filterlage gefaltet, wodurch auch die Filterlage aus den Nanofasern zick-zack-förmig gefaltet ist. Bei einer anderen Ausgestaltung ist die Filterlage aus den Nanofasern nicht gefaltet ausgeführt sondern umgibt die zweite Filterlage. Somit verfügt die Filterlage aus den Nanofasern lediglich über wenige Berührungsstellen mit der zweiten Filterlage.

Es ist vorteilhaft, wenn die aus den Nanofasern gebildete Filterlage unlösbar mit der zweiten, aus einem anderen Material gebildeten Filterlage verbunden ist. Hierbei können die Filterlagen vollflächig oder nur partiell miteinander verbunden sein. Bei partiellen Verbindungen können einzelne Verbindungspunkte oder linienartige Verbindungsstellen vorgesehen sein. Die Verbindung der Filterlagen kann z.B. durch Kleben oder Schweißen erzeugt sein. Weiterhin können sich die Filteranlagen auch derart ineinander verhaken, bzw. miteinander verbinden, dass eine zerstörungsfreie Trennung der Filterlagen nicht möglich ist. Durch das unlösbare Verbinden der Filterlagen miteinander sind größere Relativbewegungen, welche z.B. zur Beschädigung einer Filterlage führen können, verhindert. Weiterhin ist die Verarbeitung des Filtermediums, wenn die Filterlagen unlösbar miteinander verbunden sind, einfacher, da beide Filterlagen gleichzeitig verarbeitet werden können.

Bei einer besondern Ausgestaltung der Erfindung ist das Filterelement zur Reinigung eines Dielektrikums einer Senk-oder Drahterodiermaschine vorgesehen. Auf derartigen Maschinen werden auch sehr kleine Partikel im Bereich von 0 bis 16 µm erzeugt. Insbesondere Partikel mit 1 - 2,5 µm bzw. 3 - 8 µm sind in großer Anzahl vorhanden. welche dann mit dem Dielektrikum von dem bearbeiteten Werkstück weg transportiert werden. Zur optimalen Funktionalität des Dielektrikum müssen auch sehr kleine Partikel von Anfang an ausgefiltert werden, da sonst die Effektivität des Bearbeitungsvorgangs reduziert wird. Daher ist ein hoher Anfangsabscheidegrad wichtig.

### Kurze Beschreibung der Zeichnungen

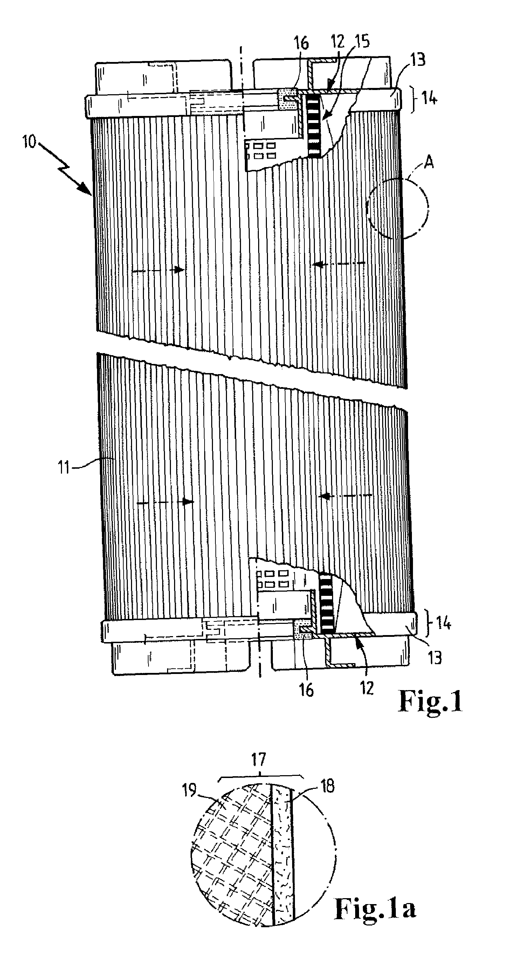

Weitere Einzelheiten der Erfindung werden nachfolgend anhand der Figuren beschrieben. Hierbei zeigt die Figur 1 ein Filterelement mit Ausbrüchen und die Figur 1a einen Ausschnitt A aus dem Filtermedium gemäß Figur 1.

### Ausführungsform(en) der Erfindung

In der Figur ist ein Filterelement 10 in der Seitenansicht mit zwei Ausbrüchen dargestellt, wobei die Länge des Filterelementes 10 durch Bruchlinien verkürzt dargestellt ist. Das Filterelement 10 verfügt über ein zick-zack-förmig gefaltetes Filtermedium 11, welches an seinen Stirnseiten 12 mit Endscheiben 13 verbunden ist. Die Endscheiben 13 verfügen über einen Aufnahmebereich 14, in welchen das gefaltete und ringförmig geschlossene Filtermedium 11 eingesteckt und mit einem Kleber (nicht dargestellt) dichtend fixiert ist, wobei der Kleber auch durch die Kunststoffendscheibe gebildet werden kann. Weiterhin ist ein flüssigkeitsdurchlässiges Stützrohr 15 mit den Endscheiben 13 verbunden, wobei das Stützrohr 15 innerhalb des geschlossenen Filtermediums 11 angeordnet ist. Das dargestellte Filterelement 10 ist in Pfeilrichtung von Außen nach Innen durchströmt, wodurch sich das Filtermedium 11 an dem Stützrohr 15 abstützen kann und zu große Durchbiegungen verhindert werden. Bei Filterelementen, welche von Innen nach Außen durchströmt werden, ist der Stützkörper derart angeordnet, dass er das Filtermedium umschließt und außen abstützt (nicht dargestellt). Weiterhin ist eine Dichtung 16 an der Endscheibe 13 angeordnet, welche den dichtenden Einbau des Filterelementes 10 in ein Filtergehäuse (nicht dargestellt) ermöglicht. Die Endscheiben 13 und das Stützrohr 15 bestehen aus einem thermoplastischen Kunststoff. Die Dichtung 16 besteht aus einem Elastomer. Selbstverständlich können die Bauteile auch aus anderen, im Stand der Technik bekannten Materialien bestehen, welche über eine ausreichende Formstabilität bzw. Elastizität verfügen.

Das Filtermedium 11 verfügt über zwei Filterlagen 17. Die äußere Filterlage 17, welche durch Nanofasern 18 gebildet ist, ist dünner als 0,1µm. Die innere Filterlage 17, welche als Trägermaterial dient, ist durch ein Zellulosepapier 19 gebildet, welches über eine Filterfeinheit von ca. 3 bis 25 µm verfügt. Die innere, aus Zellulosepapier 19 bestehende Filterlage 17 dient der Abstützung der äußeren Filterlage 17, da das Zellulosepapier 19 über eine ausreichende Eigenstabilität verfügt. Die durch Nanofasern 18 gebildete Filterlage 17 ist nicht selbsttragend und benötigt zur Stabilisierung der Form ein Trägermaterial. Bei anderen, nicht dargestellten Ausführungen können gesonderte Trägerschichten vorgesehen sein, welche ausschließlich zur Stabilisierung der aus Nanofasern 18 gebildeten Filterlage 17 dienen und über keinen nennenswerten Abscheidegrad verfügen.

Neben dem gezeigten, zweilagigen Aufbau des Filtermediums 11 können selbstverständlich auch mehrlagige Filtermedien verwendet werden. Hierbei können die Abscheidegrade der einzelnen Filterlagen 17 variieren.

## Patentansprüche

1. Filterelement (10) für Flüssigkeiten, insbesondere für Kühl-, Schmier- oder Bearbeitungsflüssigkeiten bei Werkzeugmaschinen, aufweisend ein Filtermedium (11) und Endscheiben (13), wobei das Filtermedium (11) insbesondere zylindrisch ausgebildet ist, und die Endscheiben (13) an Stirnseiten (12) des Filtermediums (11) angeordnet sind, **dadurch gekennzeichnet, dass** das Filtermedium (11) über mindestens zwei unterschiedliche Filterlagen (17) verfügt, wobei eine dieser Filterlagen (17) durch Nanofasern (18) gebildet ist.

2. Filterelement nach Anspruch 1, **dadurch gekennzeichnet, dass** die Nanofasern (18) über Faserdurchmesser von 0,15µm bis 1,0µm verfügen.

3. Filterelement nach einem der Ansprüche 1 oder 2, **dadurch gekennzeichnet, dass** die aus Nanofasern (18) gebildete Filterlage (17) auf der Anströmseite des Filtermediums (11) angeordnet ist.

4. Filterelement nach einem der Ansprüche 1 oder 2, **dadurch gekennzeichnet, dass** die aus Nanofasern (18) gebildete Filterlage (17) auf der Abströmseite des Filtermediums (11) angeordnet ist.

5. Filterelement nach einem der vorangehenden Ansprüche, **dadurch gekennzeichnet, dass** das Filtermedium (11) zick-zack-förmig gefaltet und ringförmig geschlossen ist.

6. Filterelement nach einem der vorangehenden Ansprüche, **dadurch gekennzeichnet, dass** die Filterlagen (17) unlösbar miteinander verbunden sind.

7. Filterelement nach einem der vorangehenden Ansprüche, **dadurch gekennzeichnet, dass** das Filterelement zur Reinigung eines Dielektrikums einer Senk-oder Drahterodiermaschine vorgesehen ist.
